# EUROPEAN PATENT APPLICATION

(11) **EP 4 675 082 A1**
(43) Date of publication of application: **07.01.2026**
(21) Application number: 25187043.2
(22) Date of filing: 02.07.2025
(51) Int. Cl.: F01D 5/02, F01D 5/04

(54) **PARTIAL EXIT CENTRIFUGAL COMPRESSOR**

(30) Priority: 02.07.2024 US 202418761549
(71) Applicant: PRATT & WHITNEY CANADA CORP., Longueuil, Québec J4G 1A1 (CA)
(72) Inventor: STRATTON, Russell, (01BE5) Longueuil, J4G 1A1 (CA); LABRECQUE, Michel, (01BE5) Longueuil, J4G 1A1 (CA)
(74) Representative: Dehns

(57) **Abstract**

An impeller (200) for a gas turbine engine includes an impeller hub (202) having an impeller leading edge (205) and an impeller trailing edge (206) and a plurality of bifurcated impeller blades (223, 233, 243) arranged on the impeller hub (202) and extending from the impeller leading edge (205) to the impeller trailing edge (206), each bifurcated impeller blade (223, 233, 243) having a bifurcated pressure side (226, 236, 246) and a bifurcated suction side (224, 234, 244). The bifurcated pressure side (226, 236, 246) and the bifurcated suction side (224, 234, 244) of each bifurcated impeller blade (223, 233, 243) separate at a bifurcation point (228, 238, 248) and extend to the impeller trailing edge (206) with a reduced flow channel (232, 242, 250) defined between adjacent bifurcated impeller blades (223, 233, 243). A blocked zone (230, 240, 254) is defined within each bifurcated impeller blade (223, 233, 243) between the bifurcated pressure side (226, 236, 246) and the bifurcated suction side (224, 234, 244) and each of the bifurcated pressure side (226, 236, 246) and the bifurcated suction side (224, 234, 244) extend tangentially from the bifurcation point (228, 238, 248) at different radii of curvature.

## Description

### BACKGROUND

The subject matter disclosed herein generally relates to components for turbine engines and, more particularly, to centrifugal compressors and exit schemes thereof.

The climate crisis has created an urgent need for the global aviation industry to reduce and ultimately eliminate its contribution to global warming. As the demand for air travel continues to rise, the aviation industry is working to develop sustainable solutions that reduce the sector's climate impacts. For example, engine efficiency may be improved to reduce aviation climate impacts while also reducing fuel costs of operators. Increasing the pressure ratio of gas turbines is an effective means of improving overall cycle efficiency; however, maintaining a corrected flow per unit area at the compressor exit requires decreasing the exit flow area as pressure increases. Area reductions may be achieved by reducing the channel height (i.e., blade height). At some point, the channel height becomes sufficiently small that the tip clearance needed to cope with manufacturing and assembly tolerances become a high percentage of the blade height, causing compressor stability (surge margin) and performance retention issues. Hence, there is a limit on increasing pressure ratios due to compressor blade tip clearances relative to the height of the blade itself. This limit is reached more quickly on smaller engines, such as turboprop, turboshaft, and turbofan engine configurations. These classes of engines are often able to use centrifugal compressors (impellers) due to their smaller diameters. Centrifugal compressors can employ smaller blade heights than axial compressors but the overall pressure ratio of small gas turbines is still well below that of large engines because of the aforementioned size constraints. Accordingly, improvements to impeller-type engine configurations may provide advances in reducing impacts of operating such engines and improving the efficiency thereof.

### SUMMARY

According to some aspects, impellers for gas turbine engines are provided. The impellers include an impeller hub having an impeller leading edge and an impeller trailing edge and a plurality of bifurcated impeller blades arranged on the impeller hub and extending from the impeller leading edge to the impeller trailing edge, each bifurcated impeller blade having a bifurcated pressure side and a bifurcated suction side. The bifurcated pressure side and the bifurcated suction side of each bifurcated impeller blade separate at a bifurcation point and extend to the impeller trailing edge, with a reduced flow channel is defined between adjacent bifurcated impeller blades, a blocked zone is defined within each bifurcated impeller blade between the bifurcated pressure side and the bifurcated suction side, and each of the bifurcated pressure side and the bifurcated suction side extend tangentially from the bifurcation point at different radii of curvature.

In addition to one or more of the features described herein, or as an alternative, further examples of the impellers may include that the blocked zone is filled with a filler material.

In addition to one or more of the features described herein, or as an alternative, further examples of the impellers may include that the blocked zone is filled with air.

In addition to one or more of the features described herein, or as an alternative, further examples of the impellers may include that the blocked zone is open along the impeller trailing edge.

In addition to one or more of the features described herein, or as an alternative, further examples of the impellers may include that the blocked zone is closed along the impeller trailing edge.

In addition to one or more of the features described herein, or as an alternative, further examples of the impellers may include a blade extension extending radially outward from each blocked zone.

In addition to one or more of the features described herein, or as an alternative, further examples of the impellers may include an impeller static structure arranged radially outward from the impeller trailing edge and defining a diffusing region, wherein the blade extensions are configured to travel through the diffusing region.

In addition to one or more of the features described herein, or as an alternative, further examples of the impellers may include that the bifurcation point is at the impeller leading edge.

In addition to one or more of the features described herein, or as an alternative, further examples of the impellers may include that the bifurcation point is at a position between the impeller leading edge and the impeller trailing edge.

In addition to one or more of the features described herein, or as an alternative, further examples of the impellers may include that each reduced flow channel has a channel inlet defined at the impeller leading edge and a channel outlet defined at the impeller trailing edge, wherein each outlet is defined circumferentially between a respective bifurcated pressure side of a bifurcated impeller blade and a respective bifurcated suction side of an adjacent bifurcated impeller blade at the impeller trailing edge.

In addition to one or more of the features described herein, or as an alternative, further examples of the impellers may include that bifurcated impeller blade has a Y-shaped geometry with a stem of the Y-shape geometry located at the impeller inlet.

In addition to one or more of the features described herein, or as an alternative, further examples of the impellers may include that the bifurcated impeller blade comprises a non-bifurcated portion that extends from impeller leading edge to the bifurcation point.

In addition to one or more of the features described herein, or as an alternative, further examples of the impellers may include that the impellers are part of an impeller assembly and the impeller assembly includes a plurality of diffuser elements arranged radially outward from the impeller trailing edge.

In addition to one or more of the features described herein, or as an alternative, further examples of the impeller assemblies may include a blade extension extending radially outward from each blocked zone between the impeller trailing edge and the plurality of diffuser elements.

In addition to one or more of the features described herein, or as an alternative, further examples of the impeller assemblies may include an impeller static structure arranged radially outward from the impeller trailing edge and defining a diffusing region, wherein the blade extensions are configured to travel through the diffusing region.

According to some other aspects, gas turbine engines are provided. The gas turbine engines include a fan, a combustor section, a turbine section, and a compressor section, wherein the compressor section comprises an impeller assembly. The impeller assembly includes an impeller hub having an impeller leading edge and an impeller trailing edge and a plurality of bifurcated impeller blades arranged on the impeller hub and extending from the impeller leading edge to the impeller trailing edge, each bifurcated impeller blade having a bifurcated pressure side and a bifurcated suction side. The bifurcated pressure side and the bifurcated suction side of each bifurcated impeller blade separate at a bifurcation point and extend to the impeller trailing edge, a reduced flow channel is defined between adj acent bifurcated impeller blades, a blocked zone is defined within each bifurcated impeller blade between the bifurcated pressure side and the bifurcated suction side, and each of the bifurcated pressure side and the bifurcated suction side extend tangentially from the bifurcation point at different radii of curvature.

In addition to one or more of the features described herein, or as an alternative, further examples of the gas turbine engines may include a plurality of diffuser elements arranged radially outward from the impeller trailing edge.

In addition to one or more of the features described herein, or as an alternative, further examples of the gas turbine engines may include a blade extension extending radially outward from each blocked zone between the impeller trailing edge and the plurality of diffuser elements.

In addition to one or more of the features described herein, or as an alternative, further examples of the gas turbine engines may include an impeller static structure arranged radially outward from the impeller trailing edge and defining a diffusing region, wherein the blade extensions are configured to travel through the diffusing region.

In addition to one or more of the features described herein, or as an alternative, further examples of the gas turbine engines may include that the blocked zone is closed along the impeller trailing edge.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic illustration of an engine in accordance with an embodiment of the present disclosure;
FIG. 2 is a schematic illustration of an impeller illustrating various configurations in accordance with an embodiment of the present disclosure;
FIG. 3 is a schematic illustration of an impeller in accordance with an embodiment of the present disclosure;
FIG. 4A is a front elevation view of an impeller assembly in accordance with an embodiment of the present disclosure;
FIG. 4B is a side partial cross-sectional view of the impeller assembly of FIG. 4A;
FIG. 5A is a front elevation view of an impeller assembly having blade extensions in accordance with an embodiment of the present disclosure; and
FIG. 5B is a side partial cross-sectional view of the impeller assembly of FIG. 5A.

### DETAILED DESCRIPTION

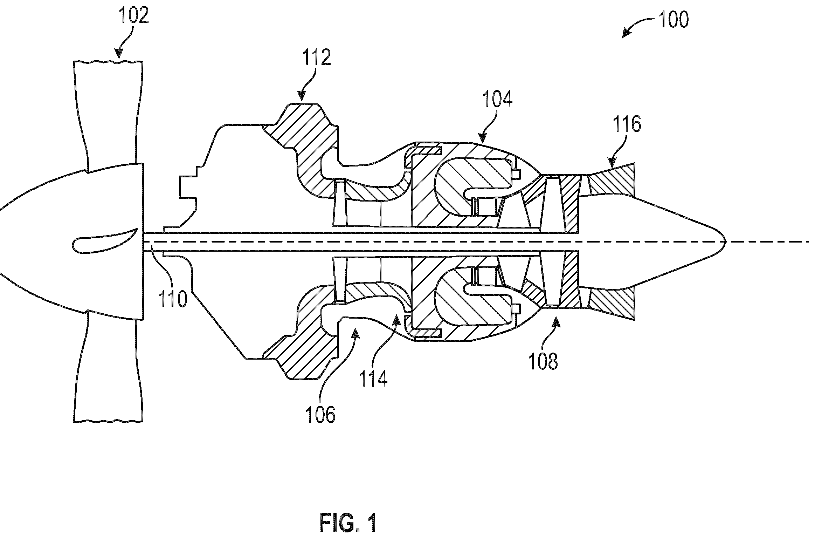

FIG. 1 is a schematic illustration of an aircraft engine 100 that may incorporate embodiments of the present disclosure. The aircraft engine 100 includes a fan section 102, a combustion section 104, a compressor section 106, and a turbine section 108. The aircraft engine 100 may be mounted to an aircraft fuselage and operationally driven to provide propulsive or motive force for flight of the aircraft. During operation, the combustion section 104 will combust a fuel that is mixed with air. In this illustrative configuration of the aircraft engine 100, air may be compressed in the compressor section 106 and the compressed air may be then directed into the combustion section 104 for combustion with the fuel. The combusted fuel and air mixture will then be directed into and through the turbine section 108 to drive an engine shaft 110 or the like, which in turn will cause rotation of the fan section 102. The engine shaft 110 may be formed of one or more shaft sections and/or spools, as will be appreciated by those of skill in the art.

The engine shaft 110 is illustratively shown as connected to the fan section 102 of the aircraft engine 100. In some configurations, the engine shaft 110 may be directly coupled to a fan rotor or the like or may be connected thereto through a gear system, a clutch system, or the like. The engine shaft 110 defines an engine axis, engine centerline, or central axis thereof. The fan section 102, the combustion section 104, the compressor section 106, and the turbine section 108 may all be full circumference or hoop structures arranged about the engine axis, with the fan section 102 at the forward end. In this orientation, a radial direction is an outward direction from the engine axis (or engine shaft 110) and the axial direction is parallel to the direction of the engine axis.

In this engine configuration, air may enter the compressor section 106 at an air intake 112, which may be sourced from a bypass flow in a duct arranged radially outward from the air intake 112, as will be appreciated by those of skill in the art. The air is then compressed in the compressor section 106. The compressor section 106 may include an impeller 114 that turns an axial flow to a radial flow which is then directed into a combustion chamber in the combustor section 104. The compressed air is combusted with fuel in the combustor section 104, and the hot gas output from the combustor section 104 will pass through the turbine section 108 and then be exhausted out an exhaust exit 116. The exhaust exit 116 may dump into a bypass duct of the aircraft engine 100.

It will be appreciated that the illustrative configuration of FIG. 1 is merely illustrative and provided for explanatory purposes only. Various types of compressor configurations, turbine configurations, combustor configurations and the like may be implemented on engines without departing from the scope of the present disclosure. For example, although shown in FIG. 1 with the hot gas traveling in an aftward direction (from the fan section 102, through the compressor section 106, the combustor section 104, and the turbine section 108), in other engine configurations, the hot gas may be directed through an impeller type compressor and then routed in an forward flowing direction such that the turbine section is forward of the combustor and the compressor is aft, as will be appreciated by those of skill in the art. The hot gas may then be directed from the turbine into a bypass flow or the like and/or exhausted out an aft end of the engine system. Furthermore, other system arrangements, such as turboshafts, turboprops, and auxiliary power units (APUs) which drive both generations and air compressors may incorporate embodiments of the present disclosure. As such, it will be appreciated that the specific illustrative configuration and arrangement of components shown in FIG. 1 is merely representative and not intended to be limiting on the disclosure herein.

Embodiments of the present disclosure are directed to engine configurations that incorporate impeller systems that enable higher pressure ratios in centrifugal compressors for small gas turbines and thus improve engine efficiency. In accordance with some embodiments of the present disclosure, an impeller with a circumferentially restricted exit area, compared to a system without such features, is provided to increase the height of the flow channel (i.e., reduce tip losses) for the same flow rate and conditions. Conversely, higher pressures may be achieved for the same flow channel height (i.e., tip losses) and flow rate. In some configurations, the impeller inlet (inducer) is fully open. In accordance with an example embodiment, and starting at the inducer inlet or at a partial chord position, the impeller blades are arranged to constrict the available flow channel, creating zones on the impeller that are not open to the flow. The restricted flow channels allow for more blade height for the same channel width and flow area. The blocked space between the impeller blades may be filled, may be closed, or may be left open. If the space is filled, it may be with the same material used for the impeller blades or may be filled with a light-weight filler material. The radial outer edges of the blocked space may or may not be closed. The result of the modified impeller blades is a partial-exit impeller.

In accordance with various embodiments, the partial exit impeller configuration may or may not include blade tip devices to reduce losses that may result from gaps between the open flow channels created by circumferentially restricting the flow channels. In some embodiments, impeller extensions may extend from the impeller hub boundary into a radial diffuser channel. The impeller extensions may be configured to diffuse the flow radially in a constant height channel as the area is gradually increased. In small gas turbine applications, additional rotor stress from increasing the impeller radius may not limit the impeller life. Similarly, dynamics from blade tip wakes may be of lower importance in small cores. The partial exit impellers of the present disclosure are configured to feed air in a conventional diffuser (e.g., diffuser pipes, scroll-type diffuser, etc.).

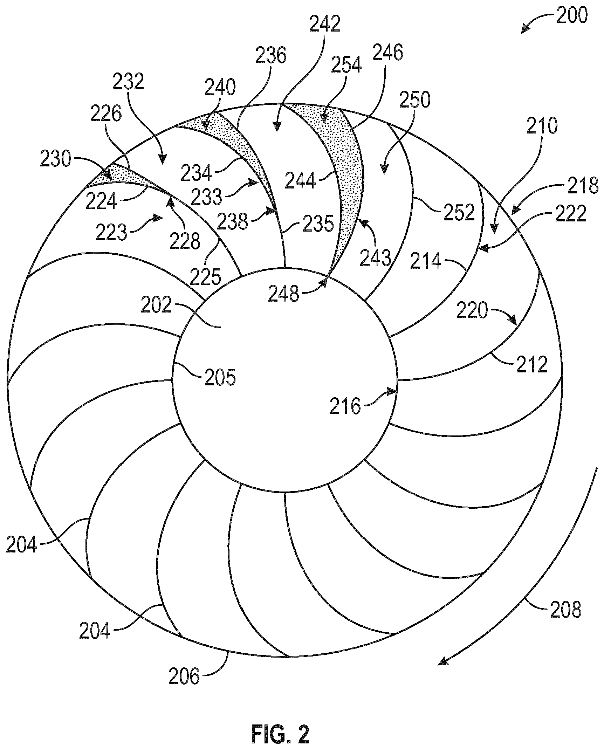

Referring now to FIG. 2, a schematic illustration of an impeller 200 is shown. The impeller 200 may be incorporated into a gas turbine engine, such as shown and described above with respect to FIG. 1, or may be incorporated into other gas turbine engines, as will be appreciated by those of skill in the art. The impeller 200 has an impeller hub 202, a set of impeller blades 204 arranged on the impeller hub 202, an impeller leading edge 205 (e.g., at leading edge of impeller blades 204), and an impeller trailing edge 206 (e.g., at trailing edge of impeller blades 204). The impeller blades 204 extend radially from the impeller leading edge 205 to the impeller trailing edge 206 and curve along a surface of the impeller hub 202. The impeller 200 is configured to rotate, in this illustration, in a clockwise direction 208.

In a conventionally arranged impeller, and as shown in a portion of FIG. 2, a flow channel 210 is defined circumferentially between adjacent impeller blades 212, 214. The flow channel 210 extends radially outward from the impeller leading edge 205 of the impeller hub 202 at a channel inlet 216 to a channel outlet 218 at the impeller trailing edge 206. The flow channel 210 is defined between a suction side 220 of a first impeller blade 212 and a pressure side 222 of an adjacent second impeller blade 214. The flow channel 210 increases in circumferential width from the channel inlet 216 to the channel outlet 218. That is, in a conventional impeller configuration, the distance between the suction side 220 of the first impeller blade 212 and the pressure side 222 of the second, adjacent impeller blade 214 increases from the channel inlet 216 to the channel outlet 218.

To improve the efficiency of the impeller 200, embodiments of the present disclosure are directed to modifying the flow channels of the impeller by adding a flow restriction that reduces or restricts the flow through the channels. For example, as shown in FIG. 2, a bifurcated impeller blade is shown having bifurcated impeller blade 223 having a non-bifurcated portion 225, a bifurcated suction side 224 and a bifurcated pressure side 226 that extends radially outward from the non-bifurcated portion 225 at a bifurcation point 228. Each of the bifurcated suction side 224 and the bifurcated pressure side 226 extend radially outward from the bifurcation point 228 to the impeller trailing edge 206. The bifurcated impeller blade 223 is an impeller blade with a pressure side and a suction side where the pressure side and the suction side of the impeller blade separate to form the bifurcated impeller blade 223. As shown, the bifurcated suction side 224 may define a suction side of the bifurcated impeller blade 223 from the bifurcation point 228 to the impeller trailing edge 206 and the bifurcated pressure side 226 may define a pressure side of the bifurcated impeller blade 223 from the bifurcation point 228 to the impeller trailing edge 206. It will be appreciated that in other arrangements, the bifurcated pressure side may define all or a portion of the pressure side of the bifurcated impeller blade and the bifurcated suction side may define all or a portion of the suction side thereof. That is, in some embodiments, the non-bifurcated portion may be omitted.

A blocked zone 230 is defined between the bifurcated suction side 224 and the bifurcated pressure side 226 of the bifurcated impeller blade 223 at positions radially outward from the bifurcation point 228. Accordingly, a reduced flow channel 232 that has a reduced flow compared to the flow channel 210 is defined between the pressure side of the bifurcated impeller blade 223 (i.e., pressure side of the non-bifurcated portion 225 to the bifurcation point 228 and the bifurcated pressure side 226 from the bifurcation point 228 to the impeller trailing edge 206) along one side of the reduced flow channel 232 and a suction side of an adjacent bifurcated impeller blade 233. In this illustrative configuration of an example of the first bifurcated impeller blade 223, the bifurcation point 228 is arranged at about two thirds along the chord of the bifurcated impeller blade 223 from the channel inlet 216 to the channel outlet 218 of the reduced flow channel 232.

Also shown in FIG. 2 are other arrangements of bifurcated impeller blades 233, 243 having flow restrictions in accordance with embodiments of the present disclosure. For example, as shown, a second example bifurcated impeller blade 233 has a non-bifurcated portion 235, a bifurcated suction side 234, and a bifurcated pressure side 236 that extends from a bifurcation point 238 about one third along the chord of the bifurcated impeller blade 233 to the impeller trailing edge 206, and defines a blocked zone 240 between the bifurcated pressure side 236 and the bifurcated suction side 234. As a result, a reduced flow channel 242 is defined between the pressure side of the bifurcated impeller blade 233 (e.g., bifurcated pressure side 234 and pressure side of non-bifurcated portion 235) along one side of the reduced flow channel 242 and a suction side of an adjacent bifurcated impeller blade 243.

As shown, a third configuration of a bifurcated impeller blade 243 having bifurcated suction side 244 and a bifurcated pressure side 246, in this illustration, provides for flow restriction that extends the complete radial distance from the impeller leading edge 205 (e.g., at the leading edge of the bifurcated impeller blade 243) to the impeller trailing edge 206. That is, a bifurcation point 248 for the third bifurcated impeller blade 243 is located at an intersection of the radially inner end (i.e., leading edge) of the bifurcated impeller blade 243 that intersects or extends radially outward from the impeller leading edge 205. Accordingly, in this example arrangement, the bifurcated impeller blade 243 defines a wall or surface of a reduced flow channel 250 along a surface of the bifurcated pressure side 246 and the opposite side is defined by a suction side of an adjacent impeller blade 252 (which is illustrated as a conventional impeller blade, but may be a bifurcated impeller blade). A blocked zone 254 is defined between the bifurcated suction side 244 and the bifurcated pressure side 246. As shown, the blocked zone 254 of this configuration extends the radial length from the impeller leading edge 205 to the impeller trailing edge 206.

The blocked zones 230, 240, 254 may be solid material, filled with a filler, or may be empty (e.g., filled with air). In some embodiments, the portion of the impeller trailing edge 206 that is defined by the blocked zones 230, 240, 254 may be sealed or covered, such that a sealed void is defined within the blocked zones 230, 240, 254. A blockage at the impeller trailing edge 206 may be provided to prevent air from turbulent flow and/or being pulled into the blocked zones 230 in configurations where the blocked zones were open and exposed. In some embodiments, the non-bifurcated potions 225, 235, the bifurcated pressure sides 226, 236, 246, and the bifurcated suction sides 224, 234, 244 may be formed of the same or similar material. That is, the segments of the bifurcated impeller blades (i.e., before and after the bifurcation point) may be formed of the same or similar material, as will be appreciated by those of skill in the art. In some embodiments, the entire bifurcated impeller blades 223, 233, 243 may be formed as unitary structures, or formed in a single process, such as molding, machining, casting, additive manufacturing, or the like. In some configurations, a lightweight filler material may be used to fill the blocked zones 230. The filler material may be solid, porous, or structured (e.g., lattice structure).

The bifurcation points 228, 238, 248 are merely examples of locations where the bifurcation of the bifurcated pressure side and bifurcated suction side may extend or bifurcate from a non-bifurcated portion and/or from the impeller leading edge 205. The location of the bifurcation point may be any position along the chord of the bifurcated impeller blades. In some embodiments, the location of the bifurcation points may be at a zero chord (e.g., bifurcation point 248) which is at the impeller leading edge 205 and extends the full radial chord from the impeller leading edge 205 to the impeller trailing edge 206. In other embodiments, the bifurcation point may be at a position along the radial length of the bifurcated impeller blade up to 95% of the chord of the bifurcated impeller blade. Accordingly, the bifurcation points, in accordance with the present disclosure, may be at a partial chord position.

The impeller 200 shown in FIG. 2 is merely illustrative, and it will be appreciated that an impeller in accordance with the present disclosure may be formed from all reduced flow channels defined by similar arrangements of bifurcated impeller blades. For example, an impeller in accordance with the present disclosure may include reduced flow channels of all equal or similar size and shape. This may be achieved by each bifurcated impeller blade of the impeller having similarly configured bifurcation point and bifurcated pressure and suction sides. It will be appreciated that the configuration of FIG. 2 is merely illustrative and provided for example and illustrative purposes.

In accordance with embodiments of the present disclosure, bifurcated impeller blades are provided. The bifurcated impeller blades may be substantially Y-shaped with variable stem length. In such Y-shaped geometries, the stem (or non-bifurcated portion) is located at the impeller inlet (or radially inward end) and the bifurcation point occurs along the chord length of the bifurcated impeller blade. In accordance with some embodiments of the present disclosure, both the bifurcated pressure side and the bifurcated suction side are formed from the same material. It will be appreciated that, in some embodiments, the bifurcation of the bifurcated pressure and suction sides may be in a substantially smooth arc such that the split/bifurcation results in a smooth transition. That is, at the bifurcation point, both the bifurcated pressure side and the bifurcated suction side have the same radius of curvature. At the bifurcation point, one or both of the bifurcated suction side and the bifurcated pressure side has a radius of curvature that changes or deviates, resulting in the bifurcation and formation of the blocked zone between the bifurcated pressure and suction sides.

It will be appreciated that the portion or bifurcated side of the bifurcated impeller blade that is on the pressure side will have a lesser curvature of radius than the suction side. That is, the bifurcated impeller blades of the present disclosure have more curvature on the suction side than on the pressure side. In some configurations, a non-bifurcated portion may have a first radius of curvature, the bifurcated pressure side may have a second radius of curvature, and the bifurcated suction side may have a third radius of curvature. In some such embodiments, the first and second radii of curvature may be the same, with the third radius of curvature being different. In other embodiments, the first and third radii of curvature may be the same and the second radius of curvature may be different. In still other embodiments, each of the first, second, and third radii of curvature may be different from each other. A smooth transition is achieved in each of the embodiments by having the portions of the bifurcated impeller blades all be tangential at a bifurcation point, after which (i.e., radially outward from the bifurcation point), the radii of curvature change or deviate to result in the blocked zone between the bifurcated pressure and suction sides.

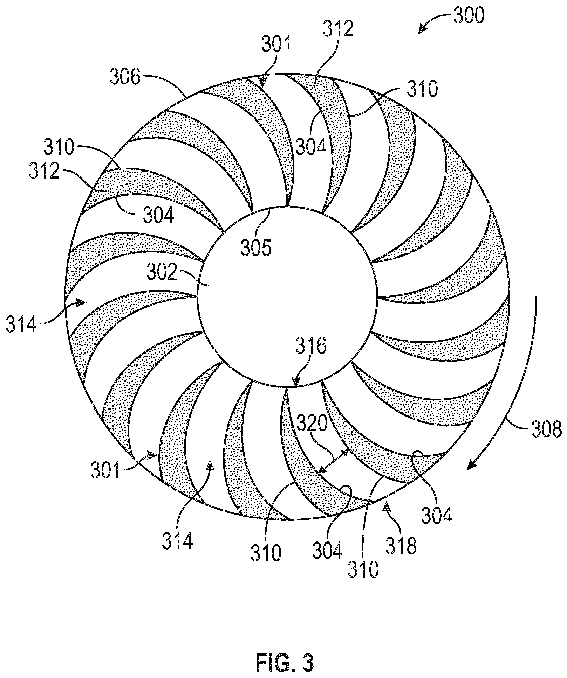

Referring now to FIG. 3, a schematic illustration of an impeller 300 in accordance with an embodiment of the present disclosure is shown. The impeller 300 may be incorporated into a gas turbine engine as shown and described above. The impeller 300 has an impeller hub 302, a set of bifurcated impeller blades 301 arranged on the impeller hub 302, an impeller leading edge 305, and an impeller trailing edge 306. The bifurcated impeller blades 301 extend radially from the impeller leading edge 305 to the impeller trailing edge 306 and curve along a surface of the impeller hub 302. The impeller 300 is configured to rotate, in this illustration, in a clockwise direction 308.

In this configuration, each of the bifurcated impeller blades 301 is configured with a bifurcated suction side 304 and a bifurcated pressure side 310. Defined circumferentially within each bifurcated impeller blade 301, between the bifurcated suction side 304 and the bifurcated pressure side 310, is a blocked zone 312. That is, a blocked zone 312 is defined within the structure of each bifurcated impeller blade 301. In this illustrated arrangement, forward of each bifurcated pressure side 310, in the direction of rotation 308, and aft of a respective bifurcated suction side 304 of an adjacent bifurcated impeller blade 301 is a reduced flow channel 314. Each reduced flow channel 314 extends from a channel inlet 316 at the impeller leading edge 305 to a channel outlet 318 at the impeller trailing edge 306.

The impeller 300 shown in FIG. 3 is formed having a configuration of bifurcated impeller blades 301 having bifurcated suction sides 304 and bifurcated pressure sides 310 that provide for flow restriction similar to the configuration of the bifurcated suction side 244 and bifurcated pressure side 246 of bifurcated impeller blade 243 shown in FIG. 2. That is, each of the bifurcated pressure sides 310 extends from a bifurcation point on the impeller leading edge 305 radially outward to the impeller trailing edge 306. In other configurations, each of the bifurcated impeller blades may be configured with a bifurcation point radially outward from the impeller leading edge 305, such as similar to the configurations of the bifurcated impeller blades 223, 233 shown in FIG. 2, which have bifurcation points 228, 238 at positions between the impeller leading edge 305 and the impeller trailing edge 306.

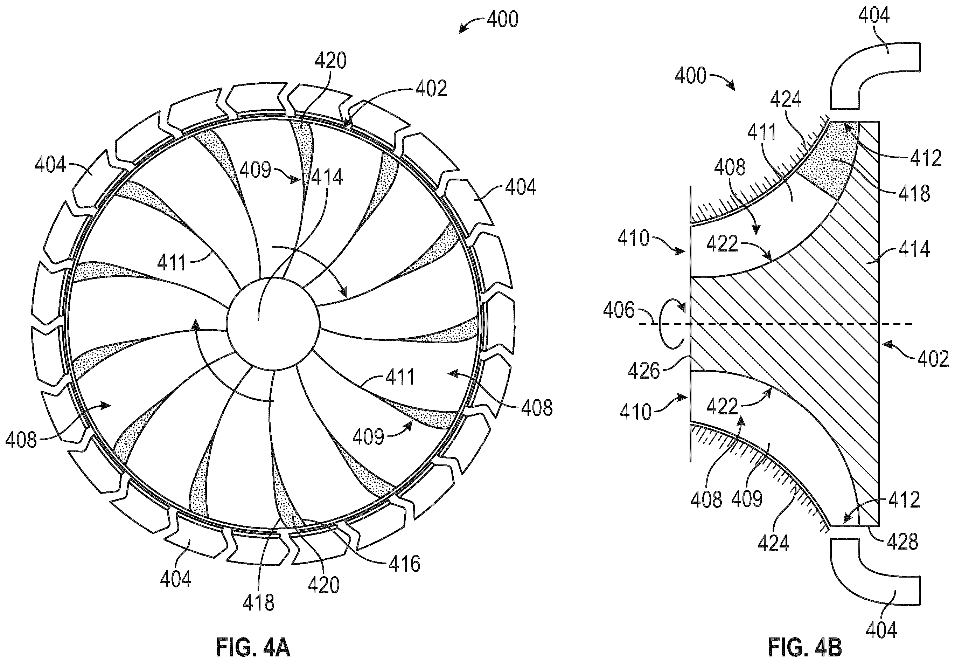

Referring now to FIGS. 4A-4B, schematic illustrations of an impeller assembly 400 in accordance with an embodiment of the present disclosure are shown. The impeller assembly 400 includes an impeller 402 and a set of diffuser elements 404 arranged radially outward from the impeller 402. The impeller 402 is configured to rotate about an axis 406, and in the view of FIG. 4A, the impeller 402 rotates in the clockwise direction. Air is configured to enter reduced flow channels 408 of the impeller 402 at respective channel inlets 410 and exit the reduced flow channels 408 at respective channel outlets 412. The impeller 402 has an impeller hub 414 on which bifurcated impeller blades 409 are arranged. Each bifurcated impeller blade 409 is configured with non-bifurcated portion 411, a bifurcated suction side 416, and a bifurcated pressure side 418, similar to that shown and described above. Between the bifurcated suction side 416 and the bifurcated pressure side 418 of the bifurcated impeller blades 409, in a circumferential direction, is a respective blocked zone 420, similar to that shown and described above.

As shown, the reduced flow channels 408 are defined in the circumferential direction between a pressure side of the non-bifurcated portion 411 and the bifurcated pressure side 418 (leading surface, pressure side) and a suction side of a non-bifurcated portion 411 and bifurcated suction side 416 of an adjacent bifurcated impeller blade 409 (trailing surface, suction side). In the radial direction (at the channel inlet 410), the reduced flow channels 408 are defined between a surface 422 of the impeller hub 414 and an impeller housing 424. Similarly, in the axial direction (at the channel outlet 412), the reduced flow channels 408 are defined between the surface 422 of the impeller hub 414 and the impeller housing 424. The radial height at the channel inlet 410 may be equal to or greater than the axial height at the channel outlet 412 (i.e., a narrowing height from the channel inlet 410 to the channel outlet 412). As shown, the bifurcated pressure sides 418 are arranged and present at the radially outer edge of the bifurcated impeller blades 409, with the radially inward portion of the reduced flow channels 408 defined between non-bifurcated portions 411 of adjacent bifurcated impeller blades 409. In other embodiments, a radially inward bifurcation point may allow for greater radial lengths of the bifurcated portions/sides, such as shown in FIGS. 2-3, or the like. In some embodiments, in the circumferential direction, the reduced flow channels 408 may be substantially uniform or constant in dimension (i.e., distance between a pressure side of one bifurcated impeller blade and a suction side of an adjacent bifurcated impeller blade), such as shown in FIG. 3. The bifurcated impeller blades 409 are arranged on the surface 422 or extend therefrom, and have a chord length that extends from an impeller leading edge 426 to an impeller trailing edge 428.

In operation, the impeller 402 will be rotated, such as by an engine shaft of the like, to compress and drive air through the reduced flow channels 408. The diffuser elements 404 are arranged radially outward from the channel outlets 412 and are arranged to receive an airflow exiting through the channel outlets 412. The diffuser elements 404 are fixed or static in position, and the impeller 402 rotates relative to the diffuser elements 404. The air that is diffused through the diffuser elements 404 may be distributed into a combustion section of the engine. For example, the diffused air may be introduced into a cavity around a combustion chamber, where the air will be mixed with fuel for combustion.

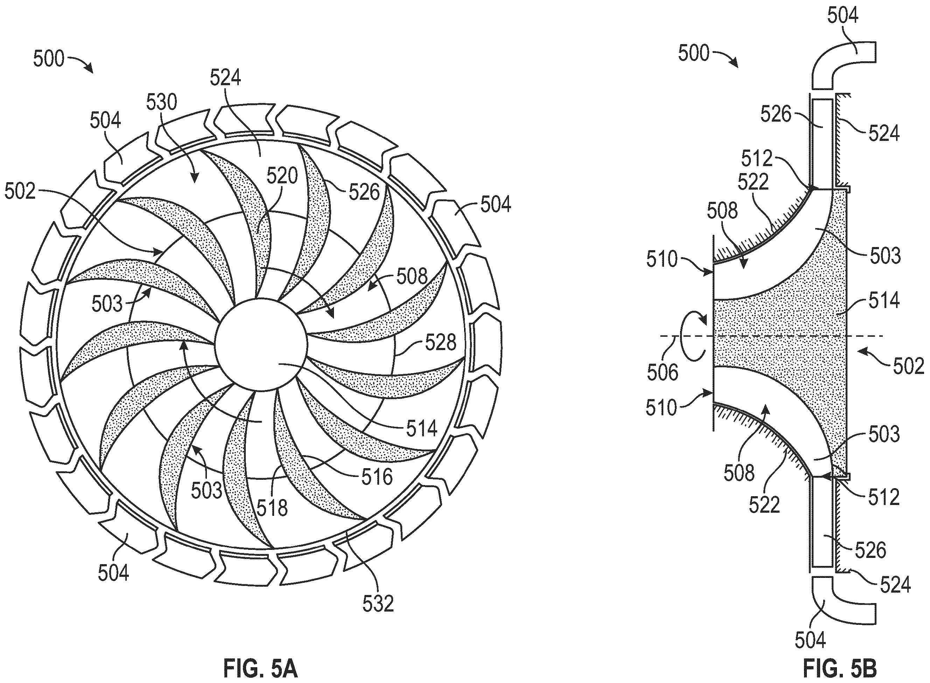

Referring now to FIGS. 5A-5B, schematic illustrations of an impeller assembly 500 in accordance with an embodiment of the present disclosure are shown. The impeller assembly 500 includes an impeller 502 and a set of diffuser elements 504 arranged radially outward from the impeller 502. The impeller 502 is configured to rotate about an axis 506, and in the view of FIG. 5A, the impeller 502 rotates in the clockwise direction. Air is configured to enter reduced flow channels 508 of the impeller 502 at respective channel inlets 510 and exit the reduced flow channels 508 at respective channel outlets 512. The impeller 502 has an impeller hub 514 on which bifurcated impeller blades 503 are arranged. Each bifurcated impeller blade 503 is configured with a bifurcated suction side 516 and a bifurcated pressure side 518, similar to that shown and described above. The bifurcated impeller blades 503 are arranged to define reduced flow restriction of air that passes through the impeller assembly 500. Between each bifurcated suction side 516 and each bifurcated pressure side 518 of an individual bifurcated impeller blade 503, in a circumferential direction, is a blocked zone 520, similar to that shown and described above.

As shown, and in this arrangement, the reduced flow channels 508 are defined in the circumferential direction between a bifurcated pressure side 518 (leading surface, pressure side) and a bifurcated suction side 516 (trailing surface, suction side). In the radial direction (at the channel inlet 510), the reduced flow channels 508 are defined between a surface of the impeller hub 514 and an impeller housing 522. Similarly, in the axial direction (at the channel outlet 512), the reduced flow channels 508 are defined between the surface of the impeller hub 514 and the impeller housing 522. The radial height at the channel inlet 510 may be equal to or greater than the axial height at the channel outlet 512 (i.e., a narrowing height from the channel inlet 510 to the channel outlet 512). In the circumferential direction, the reduced flow channels 508 may be substantially uniform or constant in dimension (i.e., distance between surfaces of adjacent bifurcated impeller blades 503).

In this configuration, the impeller assembly 500 includes an impeller static structure 524. The blocked zones 520, in this configuration, have blade extensions 526 that extend radially outward from an impeller trailing edge 528. The blade extensions 526 are formed of material that extends radially outward from the respective blocked zones 520 and define a diffusing region 530 between circumferentially adjacent blade extensions 526. The blade extensions 526 extend from the impeller trailing edge 528 to a hub outer diameter 532. The blade extensions 526 are configured to rotate with the rotation of the impeller 502, and are fixedly attached to or are integral extensions of the material of the blocked zones 520. The blade extensions 526 travel through cavity or space defined axially between the hub housing 522 and the hub static structure 524 and defined radially between the discharge edge 528 and the hub outer diameter 532.

In operation, the impeller 502 will be rotated, such as by an engine shaft of the like, to compress and drive air through the reduced flow channels 508. As the air exits the reduced flow channels 508 it will enter the diffusing region 530 between circumferentially adjacent blade extensions 526, where the air will be diffused prior to entering the diffuser elements 504. The diffuser elements 504 are arranged radially outward from the diffusing region 530 and are arranged to receive an airflow exiting the impeller 502. The diffuser elements 504 are fixed or static in position, and the impeller 502 and the blade extensions 526 rotate relative to the diffuser elements 504, and the impeller static structure 524 remains stationary with the diffuser elements 504.

In accordance with embodiments of the present disclosure, impellers of gas turbine engines are configured with circumferentially restricted exit area to increase the height of the reduced flow channel (i.e., reduce tip losses) for the same flow rate and conditions. The restricted exit area is provided through inclusion of bifurcated impeller blades that are arranged with an optional non-bifurcated portion, and at least a bifurcated pressure side and a bifurcated suction side that result in flow restriction. Advantageously, such a configuration reduces the cross-sectional area of the reduced flow channels of the impeller (as compared to a configuration without such bifurcated impeller blades). As a result, advantageously, higher pressures may be achieved for the same flow channel height (i.e., tip losses) and flow rate. The flow restriction is provided through blade or airfoil structures that bifurcate at (or extend from) the inlet end of a reduced flow channel (e.g., radially innermost point of an impeller) or at a partial chord position at a location along the bifurcated impeller blade between the inlet and the outlet of the reduced flow channel.

The blocked zone between the bifurcated pressure and suction sides of the bifurcated impeller blades may be closed at the impeller trailing edge or may be left open at the impeller trailing edge. Further, the blocked zones may be filled with material, such as the material used to form the hub, or may be filled with filler material that is different from the material of the hub. In some configurations air, gas (e.g., inert gas), or the like, may be used to fill the blocked zone. In some configurations, a lattice structure, a honeycomb structure, or other geometric pattern may be used to fill the blocked zones. In some configurations, the blocked zones may be filled with light-weight filler material (e.g., aerogel, foam, etc.).

The partial exit impellers disclosed herein may include blade tip devices to reduce losses from the large gaps between the open reduced flow channels created by circumferentially restricting the flow through the channels. For example, as shown and described above, blade extensions may be provided that extend radially outward from blocked zone defined within the bifurcated impeller blades (i.e., between the bifurcated pressure side and bifurcated suction side). Such blade extensions may be shaped similar to "shark fins" that extend from the impeller hub boundary into a radial diffuser channel. The fins or other blade extensions diffuse the flow radially in a constant height channel, with the flow area increasing with increasing radius.

Advantageously, in small gas turbine applications, additional rotor stress from increasing the impeller radius may not limit the impeller life. Similarly, advantageously, dynamics from blade tip wakes may be of lower importance in small cores. The partial exit impellers shown and described herein are configured to feed air into conventional diffuser elements arranged between the impeller and a downstream component/section of the engine (e.g., combustion section). The diffuser elements may be diffuser pipes, scroll elements, or any other type of diffuser, as will be appreciated by those of skill in the art.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. An impeller (114; 200; 300; 402; 502) for a gas turbine engine (100) comprising:
an impeller hub (202; 302; 414; 514) having an impeller leading edge (205; 305; 426) and an impeller trailing edge (206; 306; 428; 528); and
a plurality of bifurcated impeller blades (223, 233, 243; 301; 409; 503) arranged on the impeller hub (202...514) and extending from the impeller leading edge (205; 305; 426) to the impeller trailing edge (206...528), each bifurcated impeller blade (223...503) having a bifurcated pressure side (226, 236, 246; 310; 418; 518) and a bifurcated suction side (224, 234, 244; 304; 416; 516);
wherein the bifurcated pressure side (226... 518) and the bifurcated suction side (224... 516) of each bifurcated impeller blade (223...503) separate at a bifurcation point (228, 238, 248) and extend to the impeller trailing edge (206...528),
wherein a reduced flow channel (232, 242, 250; 314; 408; 508) is defined between adjacent bifurcated impeller blades (223...503),
wherein a blocked zone (230, 240, 254; 312; 420; 520) is defined within each bifurcated impeller blade (223...503) between the bifurcated pressure side (226...518) and the bifurcated suction side (224... 516), and
wherein each of the bifurcated pressure side (226...518) and the bifurcated suction side (224...516) extend tangentially from the bifurcation point (228, 238, 248) at different radii of curvature.

2. The impeller of claim 1, wherein the blocked zone (230...520) is filled with a filler material; and/or wherein the blocked zone (230...520) is filled with air.

3. The impeller of claim 1 or 2, wherein the blocked zone (230...520) is open along the impeller trailing edge (206...528).

4. The impeller of claim 1 or 2, wherein the blocked zone (230...520) is closed along the impeller trailing edge (206...528).

5. The impeller of any preceding claim, further comprising a blade extension (526) extending radially outward from each blocked zone (520), optionally further comprising an impeller static structure (524) arranged radially outward from the impeller trailing edge (528) and defining a diffusing region (530), wherein the blade extensions (526) are configured to travel through the diffusing region (530).

6. The impeller of any preceding claim, wherein the bifurcation point (248) is at the impeller leading edge (205; 305); or wherein the bifurcation point (228, 238) is at a position between the impeller leading edge (205; 426) and the impeller trailing edge (206; 428).

7. The impeller of any preceding claim, wherein each reduced flow channel (232...508) has a channel inlet (216; 316; 410; 510) defined at the impeller leading edge (205; 305; 426) and a channel outlet (218; 318; 412; 512) defined at the impeller trailing edge (206...528), wherein each outlet (218...512) is defined circumferentially between a respective bifurcated pressure side (226... 518) of a bifurcated impeller blade (223...503) and a respective bifurcated suction side (224...516) of an adjacent bifurcated impeller blade (223...503) at the impeller trailing edge (206...528).

8. The impeller of any preceding claim, wherein bifurcated impeller blade (223, 233; 409) has a Y-shaped geometry with a stem (225, 235; 411) of the Y-shape geometry located at the channel inlet (216; 410).

9. The impeller of any preceding claim, wherein the bifurcated impeller blade (223, 233; 409) comprises a non-bifurcated portion (225, 235; 411) that extends from impeller leading edge (205; 426) to the bifurcation point (228, 238).

10. An impeller assembly (400; 500) comprising the impeller (114...502) of any preceding claim, the impeller assembly (400; 500) including a plurality of diffuser elements (404; 504) arranged radially outward from the impeller trailing edge (428; 528).

11. The impeller assembly of claim 10, further comprising a or the blade extension (526) extending radially outward from each blocked zone (520) between the impeller trailing edge (528) and the plurality of diffuser elements (504), optionally further comprising an or the impeller static structure (524) arranged radially outward from the impeller trailing edge (528) and defining a diffusing region (530), wherein the blade extensions (526) are configured to travel through the diffusing region (530).

12. A gas turbine engine (100) comprising:
a fan (102);
a combustor section (104);
a turbine section (108); and
a compressor section (106), wherein the compressor section (106) comprises an impeller assembly (114; 200; 300; 400; 500) comprising:
an impeller hub (022; 302; 414; 514) having an impeller leading edge (205; 305; 426) and an impeller trailing edge (206; 306; 428; 528); and
a plurality of bifurcated impeller blades (223, 233, 243; 301; 409; 503) arranged on the impeller hub (202...514) and extending from the impeller leading edge (205; 305; 426) to the impeller trailing edge (206...528), each bifurcated impeller blade (223...503) having a bifurcated pressure side (226, 236, 246; 310; 418; 518) and a bifurcated suction side (224, 234, 244; 304; 416; 516);
wherein the bifurcated pressure side (226...518) and the bifurcated suction side (224... 516) of each bifurcated impeller blade (223... 503) separate at a bifurcation point (228, 238, 248) and extend to the impeller trailing edge (206...528),
wherein a reduced flow channel (232, 242, 250; 314; 408; 508) is defined between adjacent bifurcated impeller blades (223... 503),
wherein a blocked zone (230, 240, 254; 312; 420; 520) is defined within each bifurcated impeller blade (223...503) between the bifurcated pressure side (226...518) and the bifurcated suction side (224... 516), and
wherein each of the bifurcated pressure side (226...518) and the bifurcated suction side (224...516) extend tangentially from the bifurcation point (228, 238, 248) at different radii of curvature.

13. The gas turbine engine of claim 12, further comprising a plurality of diffuser elements (404; 504) arranged radially outward from the impeller trailing edge (428; 528).

14. The gas turbine engine of claim 13, further comprising a blade extension (526) extending radially outward from each blocked zone (520) between the impeller trailing edge (528) and the plurality of diffuser elements (504), optionally further comprising an impeller static structure (524) arranged radially outward from the impeller trailing edge (528) and defining a diffusing region (530), wherein the blade extensions (526) are configured to travel through the diffusing region (530).

15. The gas turbine engine of any of claims 12 to 14, wherein the blocked zone (230...508) is closed along the impeller trailing edge (206...528).
